# EUROPEAN PATENT APPLICATION

(11) **EP 2 803 465 A1**
(43) Date of publication of application: **19.11.2014**
(21) Application number: 13167807.0
(22) Date of filing: 15.05.2013
(51) Int. Cl.: B29C 45/27, B29C 45/30, B29C 45/00

(54) **Injection molding device**

(71) Applicant: Nexam Chemical AB, 223 81 Lund (SE)
(72) Inventor: Rosenberg, Jan-Erik, 311 41 Falkenberg (SE); Munch Elmér, Anette, 224 75 LUND (SE); Röme, Daniel, 226 51 LUND (SE); Momcilovic, Dane, 226 51 LUND (SE)
(74) Representative: Wennberg, Malin

(57) **Abstract**

An injection molding machine device (1) for increasing the temperature of a polymeric composition by imposing a shear force to the polymeric composition, comprising an adjustable throttling means (2) arranged in a channel (3) adapted to contain the polymeric composition and the adjustable throttling means (2) is adapted to being adjustable to restrict a cross section of said channel (3). Further, an injection molding machine, a method for increasing the temperature of a polymeric composition by imposing a shear force to the polymeric composition, and the use of an adjustable throttling means (3).

## Description

### Technical field

The present invention relates to an injection molding machine device, its use and a method of increasing the temperature of a substance within an injection molding machine.

### Background

An injection molding machine usually comprises an injection and a clamping section. The injection section comprises a hopper for feeding polymeric granules, a reciprocating screw located in a barrel. Heaters along the barrel aid in the melting of the polymeric material. When the polymeric material is molten it is injected through a nozzle into a mold having a mold cavity. The mold is constructed by a fixed platen and a movable platen. When the molten polymeric material enters the mold it is forwarded throughout the mold into the mold cavity or cavities via different channels and entries, i.e. via a sprue brush and via runners and gates. Each batch polymeric material forwarded and solidified in the injection molding machine is called a shot. Subsequent filling may be performed after the initial filling to avoid contraction in the material upon solidification and cooling

To keep the molten thermoplastic materials from solidifying when it enters the mold, the mold may be heated by heating means. Using such heating means involves increased energy costs and longer production times for each shot since it takes longer time for the polymeric material and mold to cool before the mold could be opened, i.e. longer times between shots. Alternatively the mold must be cooled using a cooling device after the injection of the polymer but then the mold would need more heat energy before the next shot could be introduced into the mold.

Another issue is then the polymeric material is a thermosetting polymer. Since a thermosetting polymer starts curing after initiation at a specific temperature this could cause difficulties in the filling of a mold cavity. For thermosetting polymers heat is applied to the mold by heating means. Often the heat may be increase after the polymer has been injected into the mold to initiate the curing. As disclosed above cooling and heating means are required in connection with the mold. When the mold consists of several cavities using a network of runners and gates it is important that the heat is not increased above the initiation temperature before the cavities have been filled to avoid premature setting and thus clogging.

If a temperature increase is desired the injection velocity may be increased to achieve that. However, in such a case when the injection velocity is increased the risk of premature wear and cavitations in the mold and mold cavity increases due to the velocity and pressure increase.

### Summary

It is therefore an object of the invention to overcome the deficiencies in the prior art and to allow an increase in the production rate and decrease the energy costs.

According to the present invention there is provided a way to increase the temperature of a polymeric material flowing in a channel by means of a shear force. The shear force applied may be variable. At least one such temperature increase means is present in an injection molding machine. The shear force applied increases the temperature of the flowing polymeric material allowing the material to flow more easily (lowering risk of premature solidification) or allowing curing to initiate when the temperature increases above curing temperature of the polymeric material.

An object of the present invention is to provide an injection molding machine device for increasing the temperature of a polymeric composition by imposing a shear force to the polymeric composition, comprising an adjustable throttling means arranged in a channel adapted to contain the polymeric composition and the adjustable throttling means is adapted to being adjustable to restrict a cross section of said channel.

According to one embodiment the adjustable throttling means is adjustable in a direction of about 30-150 degrees to a general flow direction of the polymeric composition of the channel, preferably essentially perpendicular to the general flow direction of the polymeric composition in the channel.

According to one embodiment said device is located between a nozzle and a mold of the injection molding machine; is incorporated into the nozzle of the injection molding machine; or is incorporated into the mold of the injection molding machine.

According to one embodiment said channel is a sprue bush, a runner, or a gate of a mold; or may be a channel of the nozzle of the injection molding machine; or may be a channel located between the nozzle and the mold of the injection molding machine.

According to one embodiment the adjustable throttling means has a front surface having a concave shape, a convex shape, or a straight shape.

According to one embodiment the front surface of the adjustable throttling means is positioned essentially parallel to the inside surface of the channel from which it extends from or to the opposite surface of the channel which it extends towards.

According to one embodiment the front surface of the adjustable throttling means extend essentially in the general flow direction of the polymeric composition.

According to one embodiment the adjustable throttling means is adapted to be adjustable in an intermittent manner or a continuous manner.

According to one embodiment the adjustable throttling means has a wedge like shape.

According to one embodiment the adjustable throttling means has a top surface and a bottom surface having the same size or one of the said surfaces is bigger than the other.

According to one embodiment the front surface is positioned at an angle towards the general flow direction facing any polymeric material forwarded in channel or is positioned at an angle from the general flow direction turning away from any polymeric material forwarded in channel.

Another object of the present invention is to provide a method for increasing the temperature of a polymeric composition by imposing a shear force to the polymeric composition in an injection molding machine comprising constricting a channel by an adjustable throttling means of an injection molding machine device, in which channel the polymeric composition is forwarded.

According to one embodiment the polymeric composition is a thermosetting polymer or a thermoplastic polymer.

According to one embodiment the shear force imposed to the polymeric composition brings about a modification of the rheology of the polymer composition.

According to one embodiment the temperature increase is initiating the curing of a thermosetting polymer.

Another object of the present invention is to provide use of an adjustable throttling means located in a channel in an injection molding machine device for increasing the temperature of a polymeric composition by imposing a shear force to the polymeric composition in an injection molding machine.

Another object of the present invention is to provide an injection molding machine comprising at least one injection molding device disclosed above.

### Short description of the drawings

Fig 1a is a perspective longitudal cross-sectional side view of a device in an injection molding machine with an adjustable throttling means arranged in a channel according to the present invention.
Fig 1b is a longitudal cross-sectional view and is similar to Fig 1a.
Fig 2a is a longitudal cross-sectional view of the channel and adjustable throttling means.
Fig 2b is a transversal cross-sectional view of an embodiment disclosed in Fig 2a.
Fig 2c is a transversal cross-sectional view of an embodiment disclosed in Fig 2a.
Fig 3a is a longitudal cross-sectional view of the channel and adjustable throttling means.
Fig 3b is a transversal cross-sectional view of an embodiment disclosed in Fig 3a.
Fig 3c is a transversal cross-sectional view of an embodiment disclosed in Fig 3a.
Fig 4a is a longitudal cross-sectional view of the channel and adjustable throttling means.
Fig 4b is a transversal cross-sectional view of an embodiment disclosed in Fig 4a.
Fig 4c is a transversal cross-sectional view of an embodiment disclosed in Fig 4a.
Figs 5a-h are perspective longitudal cross-sectional side views disclosing different embodiments of the adjustable throttling means according to the present invention.
Figs 6a-c are longitudal cross-sectional views disclosing different embodiments of the front surface of the adjustable throttling means according to the present invention.
Figs 7a-c are longitudal cross-sectional views disclosing different embodiments of the top and bottom surfaces of the adjustable throttling means according to the present invention.
Figs 8a-c are perspective longitudal cross-sectional side views disclosing embodiments of the adjustable throttling means according to the present invention.
Figs 9a-b are perspective longitudal cross-sectional side views disclosing embodiments of the adjustable throttling means according to the present invention.

### Detailed description

The present invention relates to a device in or for an injection molding machine, said device being adapted to be contacted with a polymeric material in motion and imposing a shear force providing an increase of the temperature of the polymeric composition. The device comprises an adjustable throttling means arranged in a channel adapted to contain the polymeric material. The adjustable throttling means is adapted to be adjustable in at least one direction. The adjustable throttling means may be adjusted before, during or after each shot in the injection molding machine. The adjustable throttling means is used to restrict a cross section of said channel. By restricting a cross section of said channel, that part of the channel is able to subject a polymeric composition moving therein to a shear force. The shear force imposed to the polymeric composition leads to an increased the temperature of the polymeric composition.

The device may be located between the nozzle and the mold (cavity) of the injection molding machine; or may be incorporated into the nozzle of the injection molding machine; or may be incorporated into the mold of the injection molding machine. If the device is incorporated into the mold it may be incorporated into the sprue bush, runner system or gates of the mold.

Preferably at least one injection molding machine device is incorporated into an injection molding machine. If more than one injection molding machine device is used they may be placed in different parts of the injection molding machine, i.e. one may be placed upon entry into the mold, and/or (further) devices may be placed in the runner system at different positions. If more than one injection molding machine device is used they may be coupled in series. Successive injection molding machine devices may be positioned close to each other within the same channel. Successive injection molding machine devices may also be placed in different parts of the injection molding machine at a distance from each other and in different channel types. The at least one device may be placed at or adjacent to the parting line of the mold. Such a placement of the device makes some embodiments and the formed polymeric articles easier to remove from the mold.

The adjustable throttling means of the device is adapted to restrict a cross section of a channel. The channel may be a sprue bush, a runner, or a gate of a mold; or may be a channel of the nozzle of the injection molding machine; or may be a channel located between the nozzle and the mold of the injection molding machine.

The adjustable throttling means may be adjustable in a direction at least 30 degrees to a general flow direction of the polymeric composition of the channel, such as least 45 degrees to the flow direction of the polymeric composition of the channel. The adjustable throttling means may be adjustable in a direction at most 150 degrees to the flow direction of the polymeric composition of the channel. Other examples of angles are e.g. at least 60, 80, 90, 110, 120 degrees. The adjustable throttling means may be adjustable in a direction of about 30-150 degrees to the flow direction of the polymeric composition of the channel, e.g. 45-135 degrees. The adjustable throttling means may be adjustable in a direction essentially perpendicular to the general flow direction of the polymeric composition of the channel. Essentially perpendicular is to be interpreted as close to a right angle. However, minor deviations, e.g. a few degrees, there from are to be included within the scope.

The adjustable throttling means may be adjustable in an intermittent manner or a continuous manner. Further, the adjustable throttling means may be adjusted manually or electronically. One may maneuver the adjustable throttling means between shots. Another option is to maneuver the adjustable throttling means during each shot. The adjustable throttling means may be positioned in a first position when a shot of polymeric material is forwarded in the channel. The adjustable throttling means may then be retracted towards the channel surface from which it extends from. The retraction may be performed intermittently or continuously. The first position of the adjustable throttling means is preferably as far into the channel as needed to achieve a desired shear force. All positions for the adjustable throttling means may be predetermined, i.e. the first and all subsequent positions during use. One position of the adjustable throttling means is when at least one part or edge of adjustable throttling means is in line with the inside channel surface.

The adjustable throttling means has a front surface which may extend essentially in the general flow direction of the polymeric material. The general flow direction of the polymeric material is considered to be the flow direction of a first cross section of the channel to a subsequent second cross section of the channel. The flow direction of the first cross section of the channel and the flow direction of the second cross section of the channel results in the general flow direction.

The front surface of the adjustable throttling means may have a concave, convex or straight shape. The concave and convex shapes may be rounded or angular. The front surface may be of a (half) ellipsoid-like shape, such as an essentially (half) spherical shape.

The surface of the front surface and other parts of the adjustable throttling means may be exhibiting different grades of roughness. The surfaces of the adjustable throttling means may also be smooth. However, if at least one surface of the adjustable throttling means, such as the front surface, have a rough surface or finish this may create slight adhesion between the adjustable throttling means and the polymer material.

The front surface of the adjustable throttling means may be positioned in different angles compared to the general flow direction of the polymeric composition of the channel. As examples the front surface of the adjustable throttling means may be positioned essentially parallel to the inside surface of the channel from which it extends from or to the opposite surface of the channel which it extends towards are given. However, it is not essential that the front surface must be parallel to any surface of the channel. The front surface may be positioned at an angle towards the general flow direction. If the front surface is positioned at an angle towards the general flow direction, the front surface seems to face (be turned towards) the incoming polymeric material. Alternatively, the front surface may be positioned at an angle from the general flow direction. If the front surface is positioned at an angle from the general flow direction, the front surface seems turn away from the incoming polymeric material.

If the front surface is not fully in line with the channel wall/surface when the adjustable throttling means is fully retracted, it is to be noted that it is preferable that an upper or a lower edge of the adjustable throttling means adjacent to the front surface, whichever has the smallest distance back to the inside channel surface, when it is extended, is retracted to be in line with the channel surface when the initial injection process is followed by the subsequent filling stage. Such a retraction makes the subsequent filling to avoid shrinkage easier.

The adjustable throttling means may apart from the front surface also have a top surface, a bottom surface and two side surfaces, a first and a second side surface. When the adjustable throttling means is extended into the channel the top surface may extend into the channel as much as the bottom surface, i.e. the length of the top surface equals the length of the bottom surface. Alternatively, the top surface may extend more than the bottom surface into the channel, i.e. the length of the top surface is longer than the length of the bottom surface. Alternatively, the bottom surface may extend into the channel more than the top surface i.e. the length of the bottom surface is longer than the length of the top surface. In a similar manner the two side surfaces may be of equal or different areas and/or shapes.

The area of the bottom surface and the top surface may be equal or different. In one embodiment the adjustable throttling means may be in the shape of a wedge. A wedge shaped adjustable throttling means may have a small front surface area, like a tip or edge of a wedge, and the top and bottom surfaces that are broadened further away from the front surface.

Alternatively, a wedge shaped adjustable throttling means may have a small top surface area, like a tip or edge of a wedge, and a large bottom surface area, wherein the front surface is broadened further away from the top surface. The narrow end of the front surface is close to the top surface and the wider end of the front surface is close to the bottom surface. Here the front surface would have a triangular or rhomb like shape having a small top surface area and a wide bottom surface area.

Alternatively, a wedge shaped adjustable throttling means may have a small bottom surface area, like the tip or edge of a wedge, and a large top surface area, wherein the front surface is reduced further away from the top surface. The narrow end of the front surface is close to the bottom surface and the wider end of the front surface is close to the top surface. Here the front surface would have a triangular or rhomb like shape having a small bottom surface area and a wide top surface area.

The flow direction of the first cross section of the channel and the flow direction of the second cross section of the channel results in the general flow direction.

If the front surface is of a (half) ellipsoid shape, a side surface which is oval cylindrical or cylindrical may be connected to it.

The adjustable throttling means may when fully retracted from the channel may have a front surface essentially in line with the inside surface of the channel.

The adjustable throttling means of the device may not only be adjustable in a cross section manner by how far the means is extended into the channel but also be adapted to restrict different lengths or different areas of a channel. As stated before the device may be placed at the parting line of the mold to make the removal of the formed polymeric articles easy. The adjustable throttling means may then be retracted towards the channel wall surface from which it extends from. The retraction may be performed intermittently or continuously. An initial position of the adjustable throttling means with regards to length restriction is preferably as far along the channel as needed to achieve a desired shear force. A retraction from that position may then be performed intermittently or continuously.

Said adjustable throttling means may be adjusted to impose shear force to a moving polymeric material by restriction of the flow of polymeric material in three directions/dimensions. A transversal restriction of the channel is made in two directions, both x and y axes. Also a longitudal restriction of the channel is made, along the general flow direction. However, the size of the longitudal and/or transversal restrictions of the channel may vary along the adjustable throttling means depending on the design of the adjustable throttling means and how much of it is protruding into said channel. Along a perspective longitudal cross-sectional side view one may see that maximum shear force imposed may vary between upper parts of the adjustable throttling means, i.e. those first brought in contact with the polymeric material, or lower parts of the adjustable throttling means, i.e. final parts in contact with the polymeric material, or any part anywhere in between.

The adjustable throttling means of the injection molding machine device may have any geometry. The adjustable throttling means acts to decrease the flow passage area but must still allow a flow of polymeric material.

The polymeric material used in the injection molding machine may comprise a thermosetting polymer or a thermoplastic polymer. The thermoplastic polymer may e.g. be an elastomer. The polymer compositions may in addition to the polymer also comprise catalyst, crosslinker, filler, reinforcing fibers and particles etc.

The adjustable throttling means of the injection molding machine impose a shear force to the polymer composition in motion in the injection molding machine. Said shear force give rise to a temperature increase of the polymer composition. The shear force imposed from the adjustable throttling means may also bring about a modification of the rheology of the polymer composition. The rheology modification may involve a changed viscosity of different flow directions, e.g. changed shear viscosity and/or elongational viscosity. The shear viscosity and elongational viscosity may both be increased or decreased; or the shear viscosity may be decreased and the elongational viscosity may be increased, or the other way around. If the composition is a thermosetting composition the temperature increase due to the shear force imposed to the composition initiate the curing of the composition.

Examples of thermoplastic polymers or thermosetting polymers that may be used are polyethylene, polyacrylates, polyamide, polyimide, polysulphone, polypropylene, polyaryletherketones, polycarbonates, polyesters, polymer alloyes, polyurethane, melamine resin, epoxy resin. Further examples are acrylonitrile butadiene styrene (ABS), styrene acrylonitrile (SAN), polybutylene terephthalate (PBT), polyoxymethylene (POM), polymethyl methacrylate (PMMA), polyphenylene oxide (PPO), polyphenylene ether blends (PPE), cyclic olefin copolymers (COC), liquid crystal polymers (LCPs), polyether-imide (PEI), polyphthalamide (PPA), polyarylamide (PARA), polyamide-imide (PAI), polyphenylene sulphide (PPS), polyphenylsulphone (PPSU), polyethersulphone (PES), polysulphone (PSU), polytetrafluoroethylene (PTFE), polyvinylidene fluoride (PVDF), polychlorotrifluoroethylene (PCTFE).

With the disclosed device incorporated into an injection molding machine it is possible to obtain a method for increasing the temperature of a polymeric composition by imposing a shear force to the polymeric composition forwarded in the injection molding machine. The process includes forwarding a melted polymeric material in a channel, which channel may be restricted by an adjustable throttling means. When the polymeric material is brought in contact with the adjustable throttling means, which is partly blocking the movement of the polymeric material, a shear force is imposed to said material. The adjustable throttling means acts as a throttle in the channel. Depending on the extent of the restriction, i.e. how much of the area of the channel is restricted, the magnitude of the shear force is variable in relation to it.

The method of using an adjustable throttle to achieve a temperature increase may result in a better flow a polymeric material for the further transport of the polymeric material within the injection mould machine to prevent premature solidification. The method may also result in initiating the curing of a thermosetting polymeric material without the need for additional heating or it results in an initiation of the polymeric material as late as possible to avoid premature hardening/solidification before the material has fully filled the mold cavity or cavities.

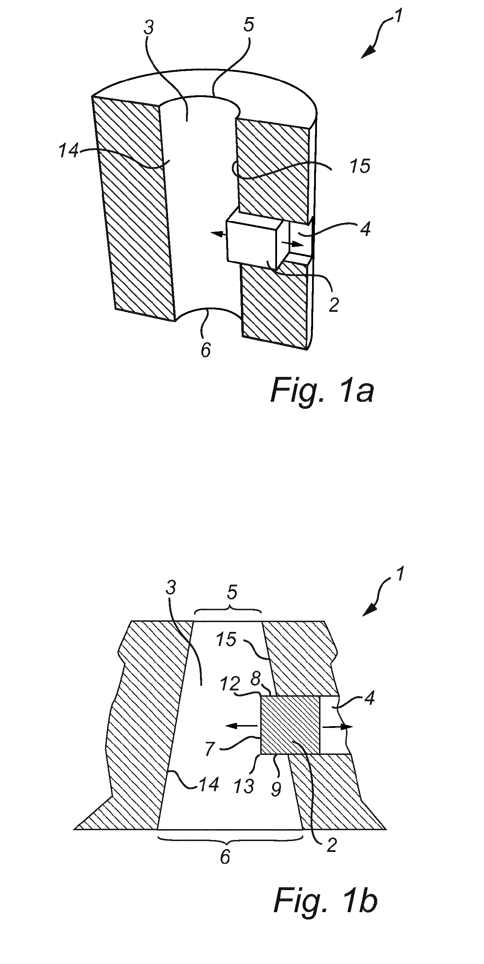

The injection molding device and the method and use thereof will now be disclosed more in detail with reference to Figs. 1a-9b. It is to be noted that not all parts of the disclosed device and means needed to operate the device in an injection molding machine are disclosed in the figures. The Figures 1a-9b are focusing on the main constituents in order to facilitate the understanding of the apparatus and its use in injection molding processing.

Fig. 1a shows a perspective transversal cross-sectional view of a first embodiment of the injection molding machine device 1 according to the present invention. The device 1 comprises an adjustable throttling means 2 and a channel 3, which may be connected to or located in the nozzle of the injection molding machine, or a sprue bush, runner or gate of the mold of the injection molding machine. The adjustable throttling means 2 is movable within a passage 4 connected to the channel 3 and may extend out into the channel 3. The adjustable throttling means 2 is preferably before each shot adjusted to be extended into the channel 3 to a preset value. The predetermined value before each shot is preferably as located as far into the channel 3 as desired to be able to achieve a desired temperature increase. The adjustable throttling means 2 may thereafter be retracted in a desirable manner. The more of the adjustable throttling means 2 that is introduced into the channel 3 the more shear force is applied to a polymer material forwarded in said channel. The adjustable throttling means 2 may then be retracted into passage 4 continuously or intermittently during the shot. If the retraction is performed intermittently different preset values for the retraction may be applied. The adjustable throttling means 2 may be retracted during the initial filling and/or subsequent filling of the mold. The adjustable throttling means 2 may be retracted after the subsequent filling of the mold and/or when the mold has been cooled. The adjustable throttling means 2 may be retracted before the movable and fixed platens are separated from each other to expose the formed polymeric details in the mold. To ease the removal of the formed polymeric details the adjustable throttling means 2 is preferably fully retracted into passage 4, not at all extending into the channel 3.

Polymeric material may be forwarded in channel 3 in a direction from a first cross section 5 of the channel 3 to a second cross section 6 of the channel 3. The second cross section 6 of the channel 3 may be equal or larger than the cross section 5 of the channel 3. When a polymeric material is forwarded between the first and second cross sections 5,6 a general flow direction is obtained. In this figure the first and second cross sections 5,6 are equal in size.

The adjustable throttling means 2 is positioned in the passage 4. The adjustable throttling means 2 is adjacent to an inside surface 15 of the channel 3 from which said means extends from. The opposite surface 14, which is opposite the adjustable throttling means 2 of the channel 3, is the surface said means extends towards.

The configuration of outer surface of the device 1 has no specific limitations, since it may depend upon where in the injection mold machine it is placed.

Fig. 1b shows transversal cross-sectional view of another embodiment of the injection molding machine device 1. The view is similar to that of Fig 1a but in this figure the second cross section 6 is larger than the first cross section 5. Also in this figure the general flow direction of polymer material in the device is from the first cross section 5 to the second cross section 6.

The adjustable throttling means 2 has a front surface 7, a top surface 8 and a bottom surface 9. An upper edge 12 is located between the top surface 8 and the front surface 7. A lower edge 13 is located between the front surface 7 and the bottom surface 9. The upper edge 12 and lower edge 13 may be of equal size (e.g. length) or one of them may be longer/larger than the other. When the adjustable throttling means 2 is adjusted back and forth within the passage 4 and the channel 3, different areas of the front surface 7, the top surface 8 and the bottom surface 9 are in contact with the polymeric material during use. The front surface 7 may be a straight surface.

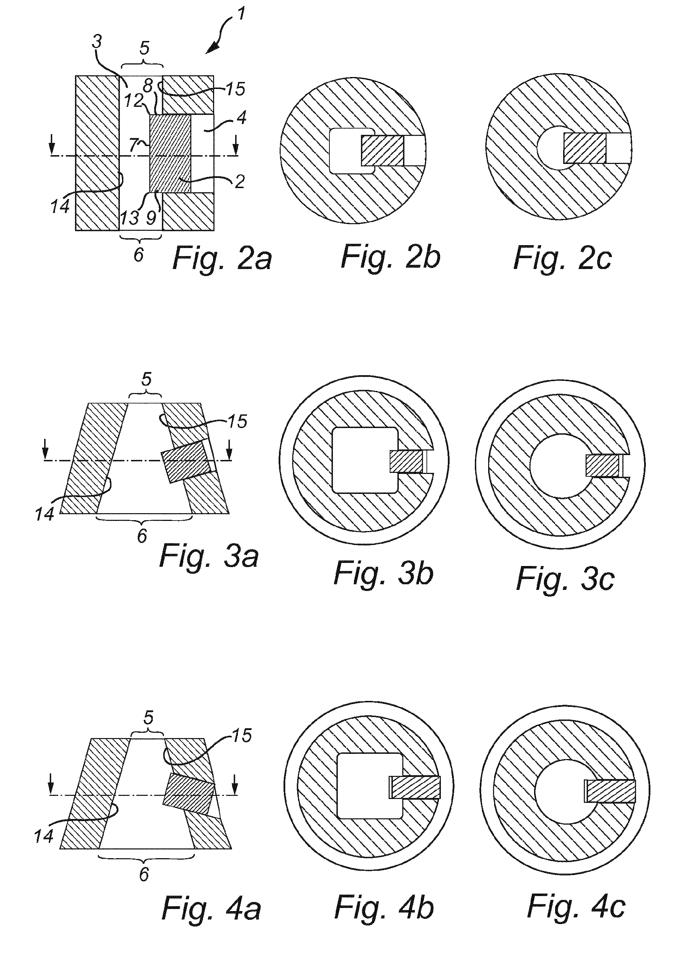

Fig 2a is a longitudal cross-sectional view of another embodiment of the injection molding machine device 1. As have been disclosed previously the injection molding machine device 1 may have a configuration where the first and second cross sections 5,6 are equal in size. The adjustable throttling means 2 may be adjustable in a direction essentially perpendicular to the general flow direction of the polymeric material of the channel 3. The general flow direction is the direction obtained through the first and second cross sections 5,6. In this figure the general flow direction is downward, parallel with the walls of the channel.

Fig 2b is a transversal cross-sectional view of an embodiment disclosed in Fig 2a. The cross sectional view shows that the channel 3 may be constructed in an essentially rectangular manner. However, the channel 3 may be constructed in other shapes too, e.g. hexagon or octagon manner etc.

Fig 2c is a transversal cross-sectional view of an embodiment disclosed in Fig 2a. The cross sectional view shows that the channel 3 may be constructed in an essentially circular manner. However, the channel 3 may be constructed in other shapes too, e.g. a more oval manner etc.

Fig 3a is a longitudal cross-sectional view of another embodiment of the injection molding machine device 1 compared to Fig 2a. The adjustable throttling means 2 may be adjustable in a direction at an angle less than 90 degrees to the general flow direction of the polymeric material of the channel 3. The general flow direction is the direction obtained through the first and second cross sections 5,6. In this figure the general flow direction is downward, from the first cross section 5 to the second cross section 6 and not being parallel with the walls of the channel 3.

Further, as have been disclosed previously the injection molding machine device 1 may have a configuration where the first and second cross sections 5,6 are different in size.

Fig 3b is a transversal cross-sectional view of an embodiment disclosed in Fig 3a. The cross sectional view shows that the channel 3 may be constructed in an essentially rectangular manner. However, the channel 3 may be constructed in other shapes too, e.g. hexagon or octagon manner etc.

Fig 3c is a transversal cross-sectional view of an embodiment disclosed in Fig 3a. The cross sectional view shows that the channel 3 may be constructed in an essentially circular manner. However, the channel 3 may be constructed in other shapes too, e.g. a more oval manner etc.

Fig 4a is a longitudal cross-sectional view of another embodiment of the injection molding machine device 1 compared to Fig 2a and Fig 3a. The adjustable throttling means 2 may be adjustable in a direction at an angle more than 90 degrees to the general flow direction of the polymeric material of the channel 3. The general flow direction is the direction obtained through the first and second cross sections 5,6. In this figure the general flow direction is downward, from the first cross section 5 to the second cross section 6 and not being parallel with the walls of the channel 3.

Fig 4b is a transversal cross-sectional view of an embodiment disclosed in Fig 4a. The cross sectional view shows that the channel 3 may be constructed in an essentially rectangular manner. However, the channel 3 may be constructed in other shapes too, e.g. hexagon or octagon manner etc.

Fig 4c is a transversal cross-sectional view of an embodiment disclosed in Fig 4a. The cross sectional view shows that the channel 3 may be constructed in an essentially circular manner. However, the channel 3 may be constructed in other shapes too, e.g. a more oval manner etc.

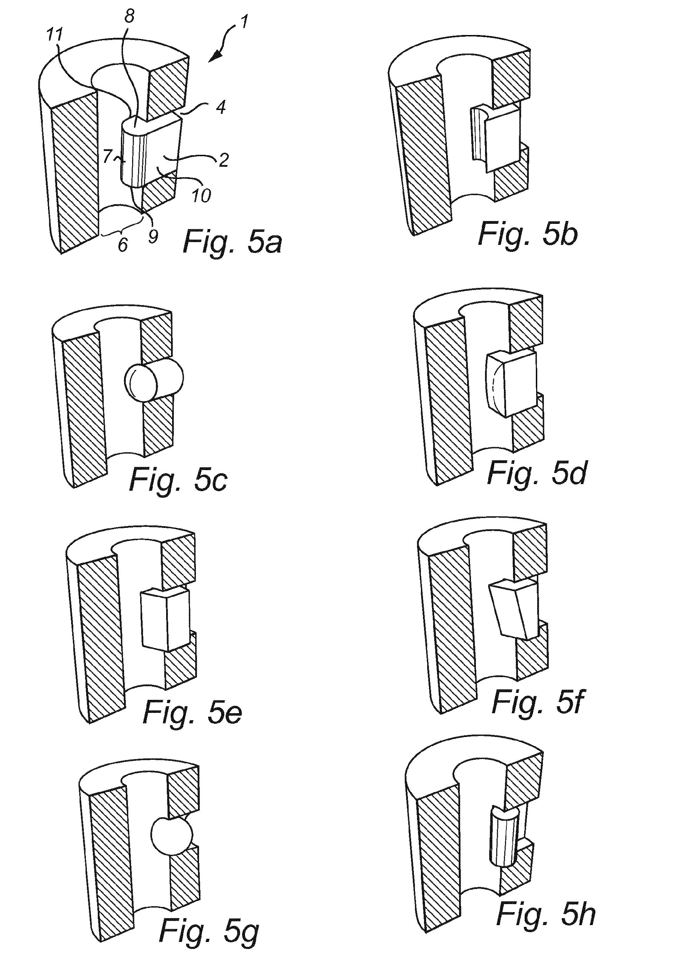

Figs 5a-h are perspective longitudal cross-sectional side views of the device 1.

Fig 5a shows the adjustable throttling means 2 with the front surface 7, the top surface 8, the bottom surface 9, a first side surface 10 and a second side surface 11, in the passage 4. The front surface 7 is shown to have a convex shape. The convex shape may have any configuration, i.e. any angular or rounded shape. Here a rounded convex shape is shown. Alternatively the front surface 7 may have a more angular shaped convex shape, e.g. forming a triangular shape, a tip.

Fig 5b shows the adjustable throttling means 2 similar to Fig 2a but with a front surface 7 having a concave shape. The concave shape may have any configuration, i.e. any angular or rounded shape. Here a rounded concave shape is shown.

Fig 5c shows the adjustable throttling means 2 which is at least partly spherical. The front surface 7 which is spherical may be connected to a cylinder forming the remaining part of the adjustable throttling means 2.

Fig 5d shows the adjustable throttling means 2 may comprise an at least partly ellipsoidical structure. The front surface 7 which may be ellipsoidical in shape may be connected to a cylinder or a regular hexahedron forming the remaining part of the adjustable throttling means 2.

Fig 5e shows the adjustable throttling means 2 where the front surface 7 may be straight but one side surface may be larger than the other. Here the second side surface 11 is larger than the first side surface 10.

Fig 5f shows the adjustable throttling means 2 where the front surface 7 may be straight but one of the top or bottom surfaces may be larger than the other. Here the top side surface 8 is larger than the bottom surface 9 but also the other way around could be possible. Alternatively the front surface 7 may have an angular shaped convex shape, e.g. forming a triangular shape, a tip. The top side surface 8 may have an area that is larger or smaller than the bottom surface 9 forming a more wedge like shaped adjustable throttling means 2.

Fig 5g shows the adjustable throttling means 2 which is essentially spherical.

Fig 5h shows the adjustable throttling means 2 which is cylindrical. The front surface 7 is a part of the rounded cylinder part. Alternatively the front surface 7 may have a more angular shaped convex shape, e.g. forming a triangular shape, a tip. Alternatively the top side surface 8 may be larger or smaller than the bottom surface 9 forming a more conical shaped adjustable throttling means 2.

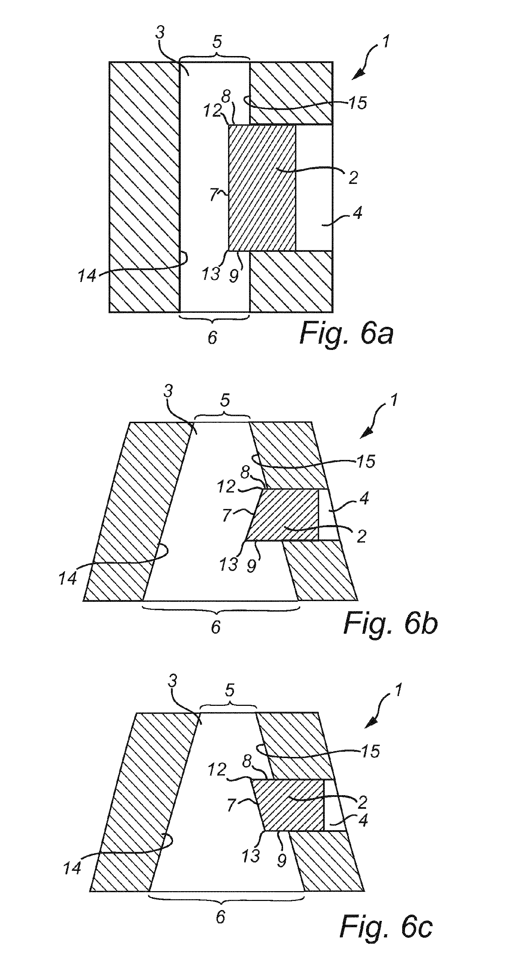

Figs 6a-c are longitudal cross-sectional views of different embodiments of the front surface of the adjustable throttling means.

Fig 6a shows the adjustable throttling means 2 of the injection molding machine device 1 having a straight front surface 7 which is parallel with the general flow direction. The front surface 7 may be essentially parallel with the inside surface 15 of the channel 3 from which the adjustable throttling means 2 extends from or to the opposite surface 14 of the channel which the adjustable throttling means 2 extends towards.

Fig 6b shows the adjustable throttling means 2 of the injection molding machine device 1 having a straight front surface 7 which may be parallel with the opposite surface 14 of the channel which the adjustable throttling means 2 extends towards. The front surface 7 may be positioned at an angle towards the general flow direction but must not necessarily be parallel to any walls of the channel. If the front surface 7 is positioned at an angle towards the general flow direction, the front surface 7 more faces or seems to meet the incoming polymeric material as can be seen in this figure.

Fig 6c shows the adjustable throttling means 2 of the injection molding machine device 1 having a straight front surface 7 which may be parallel with the inside surface 15 of the channel 3 from which the adjustable throttling means 2 extends from. The front surface 7 may be positioned at an angle from the general flow direction but must not necessarily be parallel to any walls of the channel. If the front surface 7 is positioned at an angle from the general flow direction, the front surface 7 more faces away or seems to try and avoid the incoming polymeric material as can be seen in this figure.

It is to be noted that when the injection process have completed the initial injection of polymeric material the configurations disclosed e.g. in Figs6a-c have to be adjusted. Upon start of the subsequent filling stage, to avoid shrinkage, the edge having the smallest distance to the inside channel surface 15 is made to be in line with the channel surface.

Before the formed polymer article is removed from the mold the adjustable throttling means 2 is preferably fully retracted from the channel 3.

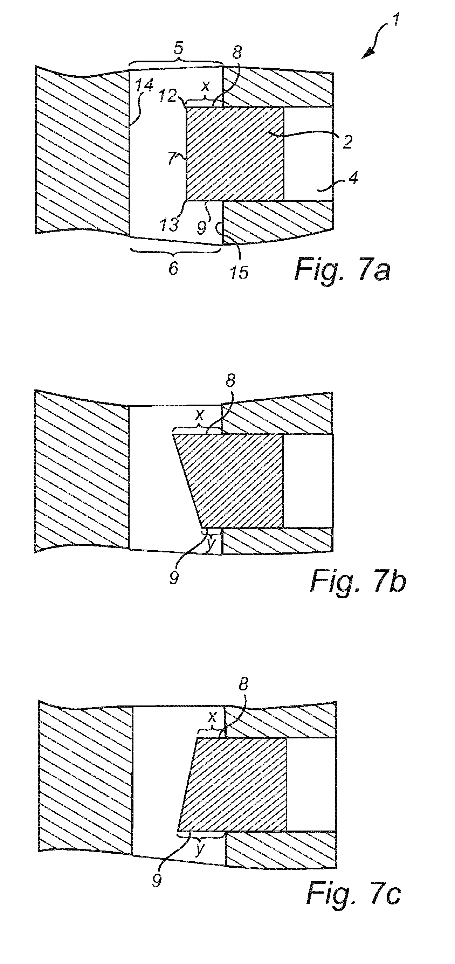

Figs 7a-c are longitudal cross-sectional views of different embodiments of the top and bottom surfaces of the adjustable throttling means.

Fig 7a shows the adjustable throttling means 2 of the injection molding machine device 1 having a top surface 8 and a bottom surface 9 which are extending to an equal amount x into the channel 3.

Fig 7b shows the adjustable throttling means 2 having a top surface 8 extending a length x into the channel 3 and a bottom surface 9 extending a length y into the channel 3, wherein x is more than y. This result in a front surface 7 positioned at an angle from the general flow direction (facing away from the general flow direction).

Fig 7c shows the adjustable throttling means 2 having a top surface 8 extending a length x into the channel 3 and a bottom surface 9 extending a length y into the channel 3, wherein x is less than y. This result in a front surface 7 positioned at an angle towards the general flow direction (facing towards from the general flow direction).

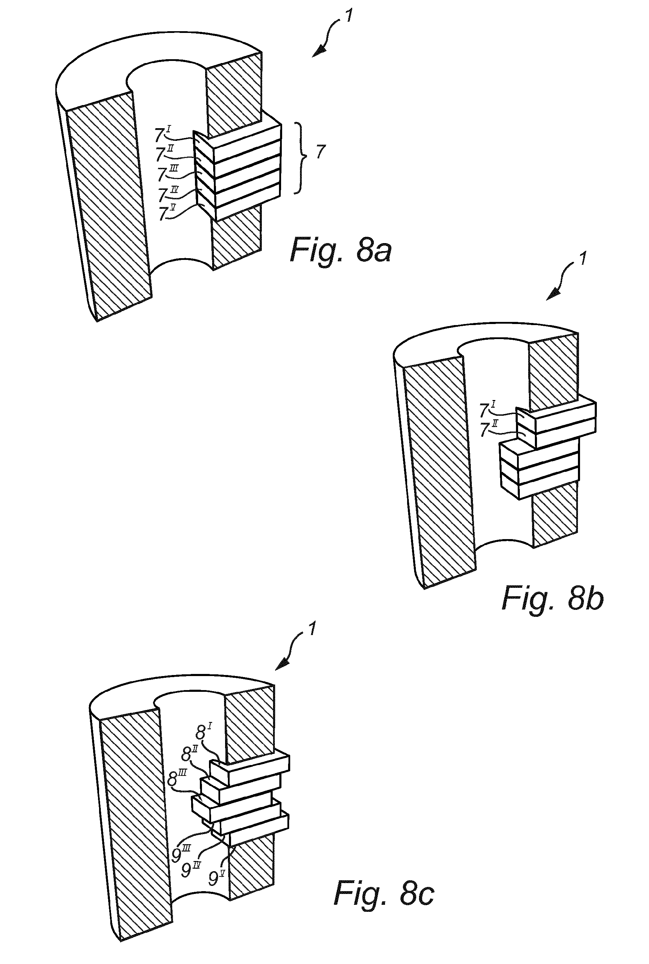

Figs 8a-c are perspective longitudal cross-sectional side views disclosing an embodiment of the adjustable throttling means 2 comprising multiple independently adjustable parts in different predetermined positions. The adjustable throttling means 2 may not only be a solid piece it may be built of several small parts, each part having its own front surface 7 being 7^{I}7^{II}7^{III},7^{IV},7^{V}, its own top surface 8 being 8^{I},8^{II},8^{III},8^{IV},8^{V}, and its own bottom surface 9 being 9^{I},9^{II},9^{III},9^{IV},9^{V}, etc. All these parts may be adjusted independently of each other thus resulting in an increased or decreased imposed shear force on any polymeric material brought in contact with said adjustable throttling means 2. This way the total area of the adjustable throttling means 2 imposing a shear force may be made variable to a very large extent, since the imposed share force not only relates to how far into the channel the adjustable throttling means 2 is introduced but also how much of the maximum front surface extended into the channel 3. Also if the adjustable throttling means 2 has a wedge like shape, the angle of "the wedge", whether the narrow end being the front surface 7, the top surface or the bottom surface 9 influences the shear force imposed on the polymeric material. If the narrow end of the wedge corresponds to the top surface 8 and/or upper part of the front surface 7, the shear force is increasing in the general flow direction when the polymer composition moves along the adjustable throttling means 2. If the narrow end of the wedge corresponds to the bottom surface 8 and the lower part of the front surface 7, the shear force imposed on the polymeric material reaches its highest value upon contact with the adjustable throttling means 2 the general flow direction when the polymer composition moves along the adjustable throttling means 2. The point of contact would then be the top surface 8 and/or upper part of the front surface 7.

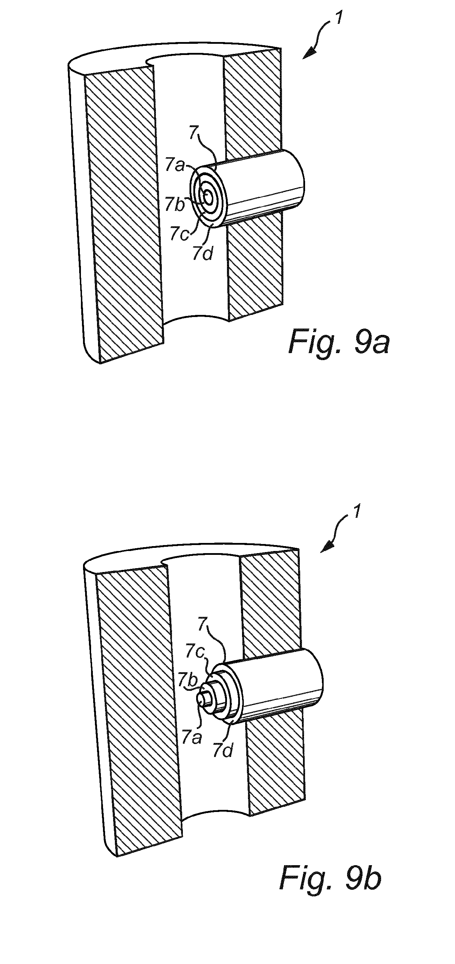

Fig 9a-b are perspective longitudal cross-sectional side views disclosing another embodiment of the adjustable throttling means 2 comprising multiple independently adjustable parts in different predetermined positions. As shown in Figs 8a-c the adjustable throttling means 2 may not only be a solid piece it may be built of several smaller parts, each part having its own front surface 7 being 7^{a},7^{b},7^{c},7^{d}, etc. All these parts may be adjusted independently of each other thus resulting in an increased or decreased imposed shear force on any polymeric material brought in contact with said adjustable throttling means 2. As for Figs 8a-c this configuration also allows a wide shear force selection.

It will be appreciated that numerous variants of the embodiments described above are possible within the scope of the appended claims.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. An injection molding machine device (1) for increasing the temperature of a polymeric composition by imposing a shear force to the polymeric composition, comprising
an adjustable throttling means (2) arranged in a channel (3) adapted to contain the polymeric composition and the adjustable throttling means (2) is adapted to being adjustable to restrict a cross section of said channel (3).

2. The device (1) according to claim 1, wherein the adjustable throttling means (2) is adjustable in a direction of about 30-150 degrees to a general flow direction of the polymeric composition of the channel (3), preferably essentially perpendicular to the general flow direction of the polymeric composition in the channel (3).

3. The device (1) according to claim 1 or 2, wherein said device (1) is located between a nozzle and a mold of an injection molding machine; is incorporated into the nozzle of the injection molding machine; or is incorporated into the mold of the injection molding machine.

4. The device (1) according to claims 3, wherein said channel (3) is a sprue bush, a runner, or a gate of a mold; or may be a channel of the nozzle of the injection molding machine; or may be a channel located between the nozzle and the mold of the injection molding machine.

5. The device (1) according to any one of claims 1-4, wherein the adjustable throttling means (2) has a front surface (7) having a concave shape, a convex shape, or a straight shape.

6. The device (1) according to any one of claims 1-5, wherein the front surface (7) of the adjustable throttling means (2) is positioned essentially parallel to the inside surface of the channel (13) from which it extends from or to the opposite surface of the channel which it extends towards.

7. The device (1) according to any one of claims 1-6, wherein the front surface (7) of the adjustable throttling means (2) extend essentially in the general flow direction of the polymeric composition.

8. The device (1) according to any one of claims 1-7, wherein the adjustable throttling means (2) is adapted to be adjustable in an intermittent manner or a continuous manner.

9. The device (1) according to any one of claims 1-8, wherein the adjustable throttling means (2) has a wedge like shape.

10. A method for increasing the temperature of a polymeric composition by imposing a shear force to the polymeric composition in an injection molding machine comprising constricting a channel (3) by an adjustable throttling means (2) of an injection molding machine device (1), in which channel (3) the polymeric composition is forwarded.

11. The method according to claim 10, wherein the polymeric composition is a thermosetting polymer or a thermoplastic polymer.

12. The method according to claim 10 or 11, wherein the temperature increase is initiating the curing of a thermosetting polymer.

13. Use of an adjustable throttling means (2) located in a channel (3) in an injection molding machine device (1) for increasing the temperature of a polymeric composition by imposing a shear force to the polymeric composition in an injection molding machine.

14. Injection molding machine comprising at least one injection molding device (1) according to any one of claims 1-9.
